# EUROPEAN PATENT APPLICATION

(11) **EP 2 541 452 A1**
(43) Date of publication of application: **02.01.2013**
(21) Application number: 11172002.5
(22) Date of filing: 29.06.2011
(51) Int. Cl.: G06F 21/00

(54) **Authentication method of user of electronic device**

(71) Applicant: FUJITSU LIMITED, Kawasaki-shi, Kanagawa 211-8588 (JP)
(72) Inventor: Lee, Vivian, Hayes, Middlesex UB4 8FE (GB)
(74) Representative: Stebbing, Timothy Charles

(57) **Abstract**

An authentication method for a user of an electronic device which provides continuous checking of whether the user accessing the electronic device is the authenticated user. The method relies on characteristic patterns of usage of a trackpad, which are registered in advance and compared (S120) with current usage data of the trackpad collected (S110) throughout normal operation. Failure to find a match results in a countermeasure (S140) such as locking the screen of the electronic device. Registration may be via a specific process or learned through normal operations of the electronic device by the user.

## Description

### Field of the Invention

The present invention relates to an authentication method of a user of an electronic device having a touch activated interface, such as an information processing apparatus, and more particularly to a technique for ensuring continuous security of the device.

### Background of the Invention

Log-in based access control is a well-known authentication method. For example, a user types in his user name and password upon start up of an information processing apparatus, or in response to a temporarily locked screen following a period of inactivity. In either case, access will be granted if both username and password match values saved for that user. Many biometric authentication mechanisms also exist that are alternatives to a username and password method; these include fingerprint recognition, palm or finger vein pattern, hand or palm geometry, facial recognition, or eye scans (iris pattern/retinal blood vessel pattern). However, all these security methods can be classified as one-off authentication, meaning that once the user is successfully logged in, there is no further security check by the device to continuously identify whether the current user is still authenticated.

One-off authentication is the most dominant access control method at present, and can be effective if the password is long enough with a mixture of character, numbers, and special characters. Meanwhile biometric methods, based on the biometric features of each individual that are mostly unique, are growing in popularity. However, neither type of authentication provides a continuous security check, and hence does not guarantee that the current user is still the same user who successfully logged on. This can leave a potential security hole. For example, in a case where an information processing apparatus is connected to a remote server on a network, malicious users might be able to access the server without any hurdle.

Similar security issues exist with electronic devices in general, whether or not they are connected to a network. For example, a mobile terminal may store sensitive information which could be accessed by a malicious third party.

### Summary of the Invention

According to a first aspect of the present invention, there is provided an authentication method of a user of an electronic device, the electronic device having a touch activated interface, the method comprising registering, in advance, identification information of the user in correspondence with at least one usage pattern of the touch activated interface, and in response to later input of the identification information to the electronic device:
retrieving at least one registered usage pattern corresponding to the identification information;
monitoring usage of the touch activated interface and extracting one or more patterns thereof;
comparing the or each extracted pattern with the or each registered usage pattern to determine a match or no match; and
in the case of determining a match in the comparing, returning to the monitoring, whereas
in the case of determining no matches in the comparing, performing an action to restrict access to the electronic device.

The present invention is capable of use with a wide range of touch activated interfaces, including touch screens, graphics tablets, touch sensitive pointing devices (e.g. mice), and so on. In the above method, preferably, the touch activated interface includes at least one touch sensitive area capable of sensing at least one touch contact, and the usage pattern includes any of: area of the touch contact; speed of a moving touch; path followed by a moving touch; touch pressure; touch duration; and length of a scrolling gesture. One example of a touch sensitive area is a trackpad as found on a laptop computer for example. Another example is a touch screen of a smartphone or tablet computer.

It will thus be apparent that a large variety of electronic devices may employ the authentication method of the present invention. A non-exhaustive list includes: computer systems, both personal and distributed, and including tablet devices in addition to laptops and desktop terminals; mobile telephones and terminals; media players; in-car entertainment, navigation and/or control systems; intelligent remote controllers, and so on.

In a case where the touch sensitive area is capable of sensing multiple touch contacts simultaneously, the usage pattern preferably further comprises any of: areas of second and any additional touch contacts; separation between touch contacts; relative pressures of the touch contacts; and relative durations of the touch contacts.

The touch activated interface may include one or more buttons, in which case the usage pattern may include any of: pressing strength of each button; pressing duration of each button; and interval between presses when double-clicking. The buttons need not be physical buttons but may be "virtual" buttons in the form of predefined areas on a touch screen.

Preferably, the electronic device further comprises a display and the input of identification information includes the user entering the identification information via a login screen shown on the display. In the case of a touchscreen-based device, the display may also provide the touch activated interface.

The electronic device may include a biometric reader and/or sensor, allowing the input of identification information to include reading a characteristic of the user via the biometric reader/sensor.

Where the electronic device has a display, the registering may be performed by operating the touch activated interface in accordance with a registration screen shown on the display. Alternatively, the registering comprises recording normal usage of the touch activated interface over a predetermined time period. In this case the registering may be performed without notification to, or even knowledge of, the user.

The registered identification information and each usage pattern may be stored in a memory of the electronic device and read out from the memory in the above-mentioned retrieving. However, it is also possible that the registered identification information and each usage pattern are stored remotely via a network and downloaded to the electronic device in the retrieving.

The monitoring may be performed on the basis of normal operation of the electronic device. Alternatively, the monitoring is performed after prompting the user to demonstrate a specific usage pattern for authentication purposes.

Preferably the comparing is performed for a combination of a plurality of said usage patterns.

A "not clear" result may occur in the comparing, in which case the monitoring step is repeated using a different said usage pattern or combination of usage patterns.

In any method as defined above, the action to restrict access to the electronic device may include any of:
displaying a login screen on a display of the electronic device for allowing the user to enter the identification information;
prompting the user to input a biometric of the user via a biometric reader;
displaying, on a display of the electronic device, a request for the user to demonstrate a registered usage pattern;
preventing user access to a remote computer to which the electronic device is connected via a network;
preventing user access to a specific application being executed on the electronic device;
blanking a display of the electronic device;
causing the electronic device to be unresponsive to the touch activated interface; and
placing the electronic device into a powered-down state.

According to a second aspect of the present invention, there is provided software which, when executed by a processor of an electronic device, performs any method as defined above. Such software may be stored on a computer-readable medium.

### Brief Description of the Drawing

Reference is made, by way of example only, to the accompanying drawings in which:
Figure 1 schematically shows an electronic device in the form of a mobile terminal;
Figure 2 is a schematic block diagram of an electronic device embodying the present invention;
Figure 3 is a schematic block diagram of a software configuration of the electronic device of Figure 2;
Figure 4 is a flowchart of a registration process performed in an embodiment of the present invention; and
Figure 5 is a flowchart of an authentication method performed in the embodiment during normal operation of the electronic device.

### Detailed Description

An embodiment of the present invention will now be described by way of example. It will be understood, however, that the present invention is by no means limited to the embodiment to be described.

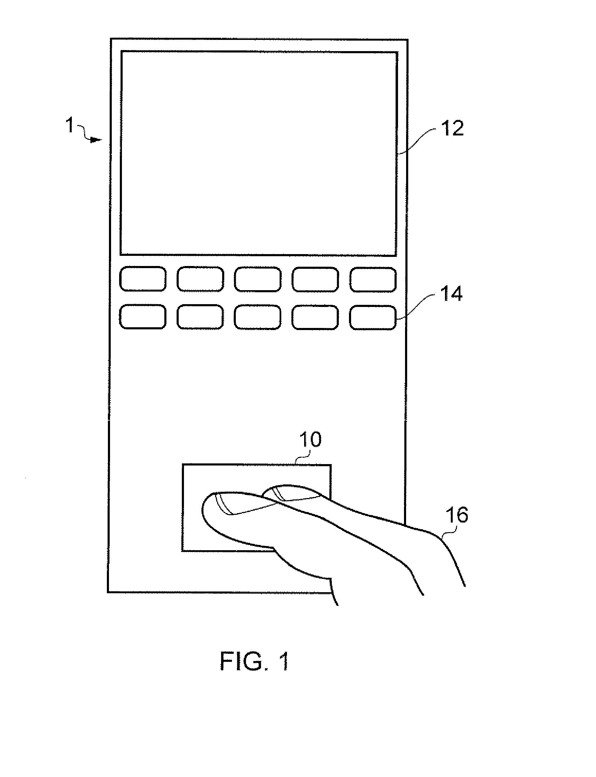

Figure 1 shows an electronic device in the form of a mobile terminal (e.g., a smartphone capable of running applications and accessing the Internet). The terminal 1 has a trackpad 10 and a display 12. The trackpad 10 is an example of a touch activated interface as employed in the present invention. It includes a touch-sensitive area - usually rectangular - as well as one or more buttons (not shown). In addition, some form of keyboard 14 will typically be provided, either in hardware form as indicated, or in virtual form on the display. A user of the electronic device interacts with the electronic device (or more precisely, with one or more applications executed either on the electronic device itself, or remotely) by touching the trackpad and/or keyboard with fingers 16. Typically the display 12 will be capable of a graphical display such that interaction with the application(s) occurs via a so-called Graphical User Interface, GUI. Typically, a GUI displays a cursor (or equivalent indicator such as an arrow) to indicate an area of the graphical display currently being pointed to, this cursor being moved by finger movements on the trackpad.

In view of the above-mentioned problem and to provide continuous security protection to a computer system, an embodiment of the present invention uses a typical touch activated interface, a trackpad for example, to continuously track a user's behaviour pattern, and compare this pattern synchronously with a pre-registered pattern. Any finger movements on the trackpad can trigger the pattern data collection and comparison activity. The whole process is executed in the background of other applications being run by the user, and parallel to cursor movement.

Most modern trackpad hardware is sufficient to handle the data collection activity; otherwise, a small sensing device can be installed to accomplish the task. This approach is economically viable since the trackpad activities are not computationally intensive, hence the whole process does not cause any significant system resource usage overhead.

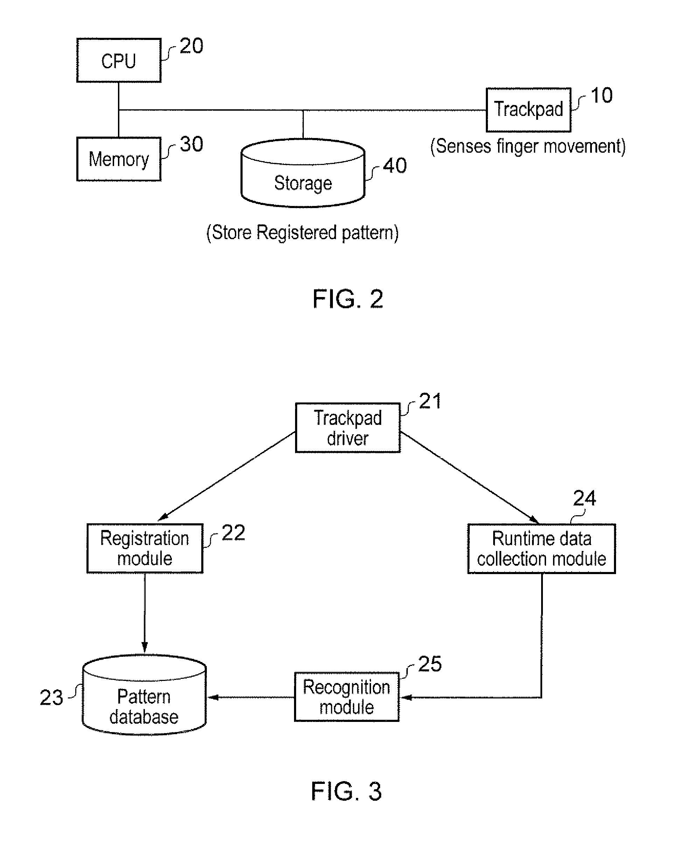

The hardware and software configurations employed in the embodiment are shown in Figures 2 and 3. From Figure 2, it will be seem that the trackpad 10, corresponding to that shown in Figure 1, is connected to a CPU 20 and memory 30, together with some form of secondary storage 40. In the example of Figure 1, these components may all be present within the terminal itself but if preferred the storage 40, for example, may be located remotely and accessed via a network. As will be apparent to those skilled in the art, the hardware configuration shown in Figure 2 is applicable to a wide range of electronic devices ranging from portable, handheld devices to computer systems, both standalone and distributed.

Figure 3 shows the software configuration employed in the embodiment, i.e. the combination of software components which, when executed by the hardware of Figure 2, enables the method of the invention to be carried out.

A trackpad driver 21 is responsible for monitoring usage of the trackpad and detecting touch signals thereof. These signals form usage patterns which tend to be repeated consistently and which are characteristic of an individual user, much like handwriting for example. These patterns may be of varying different types depending on the capabilities of the trackpad, as explained below. The trackpad driver 21 sends the detected signals, firstly, to a registration module 22 for collection at a time of a user registration process as explained below. Registered information is stored in a pattern database 23. During normal operation of the electronic device, the trackpad driver 21 sends the detection signals to a runtime data collection module 24. This in turn relays its collected data to a recognition module 25, which compares the same with the user's registered information from the pattern database 23 in the manner to be explained.

Some possible types of registered and comparison pattern data in the present embodiment are described in the following Table.

| **Table: Key data of Registration/Collection/Comparison** | | |
|---|---|---|
| ***Number*** | ***Name*** | ***Description*** |
| 1 | Fingertip size | Area size of the fingertip touching on the trackpad, for both one finger and two fingers. |
| 2 | Scrolling speed | The average speed of a finger moving on the trackpad |
| 3 | Fingertip strength | The average strength of a finger touching the trackpad |
| 4 | Clicking strength | A thumb click on the trackpad (applicable for tackpads with button) |
| 5 | Finger movement | Traces of area, e.g., small or big cycles, |
| | pattern | slow, fast |
| 6 | Two fingertips gap | The gap between two fingertips (applicable for multiple touch sensed trackpads) |
| 7 | Scroll gesture length | The length of a finger scroll on the trackpad |

Although the above Table refers to a "trackpad" the above types of pattern are applicable to various kinds of touch-activated interface such as a touch screen, touch sensitive mouse, and so on. Corresponding pattern types exist also for gestures made by both hands, given a sufficiently large touch sensitive area. Thus, the word "finger" may be replaced by "hand" in such a case.

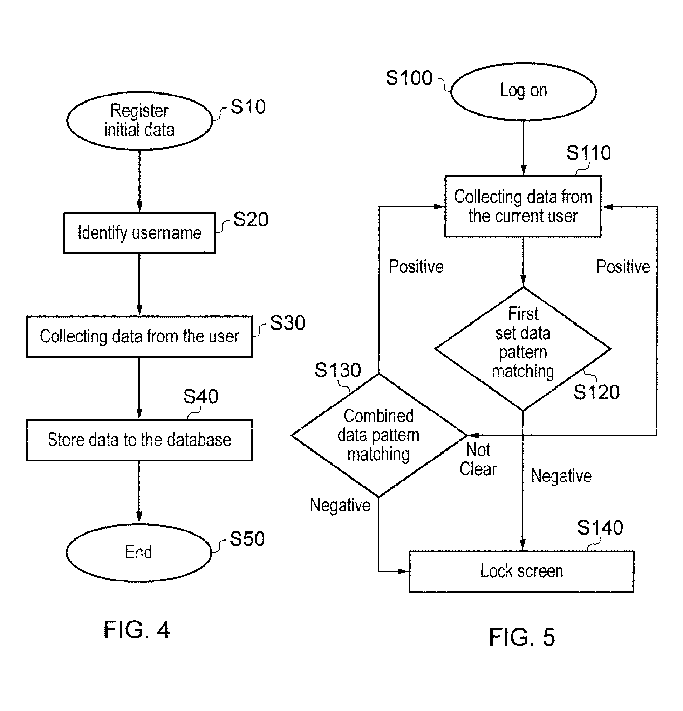

Figures 4 and 5 are flowcharts of, respectively, the registration process and the authentication method performed during normal usage of the electronic device.

Registration is indicated by steps S10 - S50 in Figure 4. An initial authentication may be requested, for example a biometric check using a palm or finger vein pattern sensor. Users then enter a username (S20) and then register their initial touch interface usage pattern data using the registration module 22 shown in Figure 3 (S30). This can be done via a GUI-fied form displaying text field, buttons, and scroll bars so that users can tap, click, or drag the cursor on the form by means of touching one or more fingers on the trackpad. The registration step may be repeated a number of times, or over a predetermined time period, so as to ensure that a statistically valid set of data is collected. The data is then (S40) stored in the pattern database 23 as an initial registered pattern record for later usage. This data may, for example, be stored in the form of an image representing the shapes drawn out by the user's fingers on the trackpad. In this way, the pattern data storage and recognition can utilize existing image processing technologies.

The registration process can be done either at a user account creation time (for example, upon a user acquiring the electronic device itself, or acquiring rights to access a specific application, remote server or website), or through normal usage over time. In the latter case it is possible for the user's normal usage patterns to become "registered" (or learned by the device) without the user's knowledge.

In either case, subsequent authentication of the user is performed continuously during normal operation, as depicted in Figure 5.

In step S100, the user first logs on to the system (or to the specific application, server or website as the case may be). Logging-on may be by any known technique, such as a biometric check. This may be the same biometric check as optionally employed at the start of the registration process. Verifying that matching biometric data exists in the system (or locally on the device as the case may be) allows a user name to be retrieved. Alternatively, or in addition, a user name and password combination may be input.

To optimize the later comparison process, right after a user has successfully logged on and been identified, the initial registered pattern record will be fetched from the pattern database 23 according to the user name and stored for convenient access by the recognition module 25. For example, where the recognition module resides within the electronic device itself this will involve reading the record from the storage 40 into a memory 30 local to the electronic device. This avoids the software going through all the data in the database when comparing to the current user trackpad pattern at computer run time, and hence reduces the comparison time.

Then, in step S110, after a user is successfully logged on, the runtime data collection module 24 starts to collect data representing at least one usage pattern, triggered by finger movement on the trackpad 10. The type of data to be collected is the same as at least one type of registered pattern data (see the above Table) - for example, the first type (Number 1 in the Table - are size of fingertip). The comparison process is started synchronously by the recognition module 25. Thus, in step S120, the recognition module 25 checks whether the newly-collected data match the corresponding data from the initial registered pattern record stored in the memory 30. As shown in Figure 5, in this example there are three possible outcomes of step S120, namely "Positive", "Not Clear" and "Negative"

"Positive" indicates that the newly-collected data matches (within some predetermined tolerance level) the corresponding stored data for the user. In this instance no action is needed, other than to return to step S110 to continue monitoring usage of the electronic device.

In the case of a "Not Clear" result in S120, flow proceeds to a step S130 in which a combined data comparison is carried out upon subsequent activity on the trackpad. For example, if a user touched a trackpad, his or her next action is dragging a sliding bar on a frame; then the scrolling speed (2) and the fingertip strength (3) are used as a combination for pattern matching. This pattern matching strategy is applicable to any combination of the above data collected in the above Table. Here, "combination" will most conveniently mean comparing each individual usage pattern one by one with the registered data of each pattern. Alternatively, it would be possible to perform matching based on a combination of data of more than one pattern type.

Finally, in the case of a "Negative" result in S120 (also referred to as "False Matching"), this indicates that the collected data does not match the stored data for the user, and some form of remedial action is taken as explained below, for example "Lock Screen" as shown in step S140.

To explain the above process in more detail, normally any trackpad activity starts with fingertip touching the trackpad area. Therefore, the first type of data to be collected is most likely to be the size of the fingertip (number 1 in the Table), or in two fingertips touching case, the gap between two fingers (number 6 in the Table). The identification of the result using the initial registered pattern record can use matching scores technique described in "Identification Model with Independent Matching Scores" by Sergey Tulyakov and Venu Govindaraju from Center for Unified Biometrics and Sensors (CUBS), SUNY at Buffalo, Amherst, NY14228, USA, hereby incorporated by reference.

The time delay between the users' trackpad activity, until the recognition module finds a negative matching, can range from milliseconds to seconds. However, this time delay can be ignored since immediate actions will be put in place as soon as a false matching is found.

Once the recognition module detects a False Matching (Negative in S120), various options are available for further action. These include, as indicated in S140, locking the system so that the user has to wait for an administrator to unlock it. An alternative action is to save the current running applications and log out the user from the system completely.

A more user-friendly approach (bearing in mind the possibility of an erroneous False Matching) is to prompt a warning message and give the user a second chance by prompting a verification screen which shares the same GUI interface as that used to register. This can involve requiring the user to submit to biometric check via a palm or finger vein sensor for example. A variation of this approach is to require the user to retype his user name and password, but this time for verification purposes. The latter approaches help the system to deal with possible abnormal usage behaviour from the same user.

A plurality of the above actions may be provided in a graduated response. That is, in response to a first Negative result, a relatively user-friendly action such as a warning message may be employed, followed by more stringent measures in response to further False Matchings.

To summarise, then, an embodiment of the present invention can provide an authentication method for a user of an electronic device which provides continuous checking of whether the user accessing the electronic device is the authenticated user. The method relies on characteristic patterns of usage of a touch activated interface, which patterns are registered or learned in advance and compared (S120) with current usage data of the interface collected (S110) throughout normal operation. Failure to find a match results in a countermeasure (S140) such as locking the screen of the electronic device. Registration may be via a specific process or learned through normal operations of the electronic device by the user.

Various modifications are possible within the scope of the present invention.

Although the described embodiment was explained with respect to a mobile terminal by way of example, the present invention is of course not limited to this and may be applied to any form of electronic device equipped with a suitable touch activated interface, not necessarily a trackpad.

Whilst Figure 1 illustrates a rectangular-form mobile terminal with a fixed display and trackpad, the invention is of course suitable for use with any form factor of device including ones with flexible or roll-up displays, and pressure-sensitive areas other than the rectangular trackpads in use today.

As already mentioned, the touch-activated interface is not necessarily a trackpad. It may include, for example a touch screen or a touch sensitive mouse. The touch-activated interface may be integral to the electronic device (as in the case of a touch screen for example) or it may be provided as a separate unit (as for example in the case of a wireless mouse). A touch screen need not be flat, or rigid, and it may be integral with a roll-up display.

The terms "touch activated interface" and "trackpad" are thus to be construed broadly.

With the possible exception of the trackpad driver, any or all of the software functions described above may be performed remotely, and the results communicated via a network. Thus, for example, the electronic device may be a client in a distributed computer system with the work of pattern recognition, biometric check if any, and so forth carried out by a remote server.

The above description referred to an initial registration process for obtaining pattern data to be used for later verification. However, an explicit registration procedure may not always be necessary. It is possible for the electronic device (having identified a specific user) to "learn" that user's characteristic usage patterns of the touch activated interface through normal operation of the device. Such "registration" by learning may avoid any "self-consciousness" on the part of the user which could affect the registration results. In other words, it is possible for the electronic device to learn gestures performed in a natural way by the user, and which the user might not be conscious of making. In this way it is possible to ensure authorised use of the electronic device without any awareness of, or interference from, the users.

As already mentioned, the present invention employs usage patterns which tend to be repeated consistently and which are characteristic of an individual user. These patterns will normally be different for the left and right hands of each user. Whilst it will generally be most convenient to perform authentication on the basis of patterns of the user's "dominant" hand (the one routinely used for touch gestures on a touch activated interface), the present invention is not restricted to this. It is equally possible to perform authentication of patterns characteristic of the user's "other" hand (namely, the one less often used to activate the interface). Also, whilst touch activated interfaces in use today generally require only one or more fingers of one hand to be used, the present invention can equally be applied to two-handed gestures, if the interface allows it. A table-top mounted touch sensitive screen would be an example of such an interface.

Although the above embodiment includes the gap between two fingertips as an example of registration and comparison pattern data, the touch activated interface need not be a "multi-touch" interface.

In the above explanation, it was assumed that any trackpad activity is sufficient to trigger the authentication process. However, it may be preferable in some instances, prior to pattern matching, to collect data over a defined time period and take an average of the readings obtained, in a similar manner for that already mentioned for registration. In this way, the chances of an incorrect false matching, due to atypical user behaviour, can be reduced.

Reference has been made above to a biometric reader for detecting a biometric of the user, but more generally any form of sensor may be employed to detect some characteristic of the user.

The flowchart of Figure 5 shows three possible outcomes of step S120, namely "Positive", "Negative" and "Not Clear". Not all of these need be considered distinctly in every case; in particular the "Negative" and "Not Clear" outcomes may be combined and used as a reason for further checking, rather than immediate action.

### Industrial Applicability

The present invention is applicable to any electronic device having a touch activated interface, and can improve security by ensuring that a user is always authenticated.

## Claims

1. An authentication method of a user of an electronic device, the electronic device comprising an touch activated interface, the method comprising registering, in advance, identification information of the user in correspondence with at least one usage pattern of the touch activated interface, and in response to later input of the identification information to the electronic device:
retrieving at least one registered usage pattern corresponding to the identification information;
monitoring usage of the touch activated interface and extracting one or more patterns thereof;
comparing the or each extracted pattern with the or each registered usage pattern to determine a match or no match; and
in the case of determining a match in the comparing, returning to the monitoring, whereas
in the case of determining no matches in the comparing, performing an action to restrict access to the electronic device.

2. The method according to claim 1 wherein the touch activated interface includes at least one touch sensitive area capable of sensing at least one touch contact and the usage pattern includes any of: area of the touch contact; speed of a moving touch; path followed by a moving touch; touch pressure; touch duration; and length of a scrolling gesture.

3. The method according to claim 2 wherein the touch sensitive area is capable of sensing multiple touch contacts simultaneously and the usage pattern further comprises any of: areas of second and any additional touch contacts; separation between touch contacts; relative pressures of the touch contacts; and relative durations of the touch contacts.

4. The method according to any preceding claim wherein the touch activated interface includes one or more buttons and the usage pattern includes any of: pressing strength of each button; pressing duration of each button; and interval between presses when double-clicking.

5. The method according to any preceding claim wherein the electronic device further comprises a display and the input of identification information includes the user entering the identification information via a login screen shown on the display.

6. The method according to any preceding claim wherein the electronic device includes a sensor or biometric reader and the input of identification information includes reading at least one characteristic of the user via the sensor or biometric reader.

7. The method according to any preceding claim wherein the electronic device further comprises a display and the registering is performed by operating the touch activated interface in accordance with a registration screen shown on the display.

8. The method according to any of claims 1 to 6 wherein the registering comprises recording normal usage of the touch activated interface over a predetermined time period.

9. The method according to claim 8 wherein the registering is performed without notification to the user.

10. The method according to any preceding claim wherein the registered identification information and each usage pattern are stored in a memory of the electronic device and read out from the memory in said retrieving.

11. The method according to any of claims 1 to 9 wherein the registered identification information and each usage pattern are stored remotely via a network and downloaded to the electronic device in said retrieving.

12. The method according to any preceding claim wherein the monitoring is performed on the basis of normal operation of the electronic device.

13. The method according to any of claims 1 to 11 wherein the monitoring is performed after prompting the user to demonstrate a specific usage pattern for authentication purposes.

14. The method according to any preceding claim wherein the comparing is performed for a combination of a plurality of said usage patterns.

15. The method according to any preceding claim wherein a "not clear" result may occur in the comparing, in which case the monitoring step is repeated using a different said usage pattern or combination of usage patterns.

16. The method according to any preceding claim wherein the action to restrict access to the electronic device includes any of:
displaying a login screen on a display of the electronic device for allowing the user to enter the identification information;
prompting the user to input a biometric of the user via a biometric reader;
displaying, on a display of the electronic device, a request for the user to demonstrate a registered usage pattern;
preventing user access to a remote computer to which the electronic device is connected via a network;
preventing user access to a specific application being executed on the electronic device;
blanking a display of the electronic device;
causing the electronic device to be unresponsive to the touch activated interface;
and
placing the electronic device into a powered-down state.

17. Software which, when executed by a processor of an electronic device, performs the method according to any preceding claim.
